# EUROPÄISCHE PATENTSCHRIFT

(11) **EP 4 526 383 B1**
(45) Veröffentlichungstag und Bekanntmachung des Hinweises auf die Patenterteilung: **25.03.2026**
(21) Anmeldenummer: 23727330.5
(22) Anmeldetag: 16.05.2023
(51) Int. Cl.: C09B 67/22, C09B 67/42, C09B 5/62, C09B 19/02

(54) **PIGMENTZUBEREITUNG AUF BASIS VON C. I. PIGMENT VIOLETT 23**
PIGMENT PREPARATION BASED ON C.I. PIGMENT VIOLET 23
PRÉPARATION PIGMENTAIRE À BASE DE PIGMENT C.I. VIOLET 23

(30) Priorität: 19.05.2022 EP 22174333
(43) Veröffentlichungstag der Anmeldung: 26.03.2025
(73) Patentinhaber: Heubach Holding Switzerland AG (Ltd), 4133 Pratteln (CH)
(72) Erfinder: KÜHLWEIN, Jürgen, 63150 Heusenstamm (DE); HAMMER, Sophie, 55131 Mainz (DE); SOHLING, Ulrich, 85356 Freising (DE); HEBER, Thomas, 65795 Hattersheim (DE); WOLF, Yann, 63741 Aschaffenburg (DE)
(74) Vertreter: Schuck, Alexander
(86) Internationale Anmeldenummer: PCT/EP2023/063154
(87) Internationale Veröffentlichungsnummer: WO 2023/222712

(56) Entgegenhaltungen:
- EP-A1- 0 678 559
- EP-A1- 0 937 724

## Beschreibung

Die vorliegende Erfindung betrifft Pigmentzubereitungen auf Basis von C. I. Pigment Violett 23, Verfahren zur deren Herstellung sowie ihre Verwendung.

Die bei ihrer Synthese oder nach dem Finish anfallenden organischen Pigmente sind in vielen Fällen für den direkten Einsatz zum Pigmentieren von Druckfarben bzw. Druckfarbenkonzentraten ungeeignet. Oft treten Schwierigkeiten auf, wie z.B. ungenügende Pigmentbenetzung und Flockulation, besonders in esterreichen Systemen, weshalb die optimale Farbstärke, Glanz und Transparenz und die erforderliche Feinheit dann nicht erreicht werden.

Häufig treten in der Folge bei Lagerung auch Viskositätserhöhungen auf, die insbesondere bei Druckfarbenkonzentraten das weitere Handling erschweren oder unmöglich machen.

In niedrigviskosen Einstellungen können ungenügend dispergierte und benetzte Pigmente auch bei der Weiterverarbeitung stören, insbesondere kann dieser Umstand leicht zu Sedimentationsproblemen führen.

Um die anwendungstechnischen Eigenschaften von Pigmenten zu verbessern, ist es daher von Vorteil, durch Zugabe von Pigmentsynergisten zum rohen Syntheseerzeugnis oder vorgefinishten Produkt Pigmentzubereitungen herzustellen, die gegenüber dem entsprechenden Basispigment eine deutliche Qualitätssteigerung erkennen lassen.

EP 0 504 922 A1 offenbart Pigmentzubereitungen enthaltend
a) C. I. Pigment Violett 23 der Formel I als Basispigment 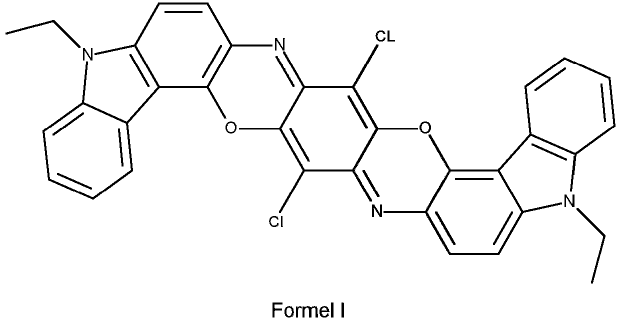 und
b) eine Dioxazinverbindung der allgemeinen Formel la

   Q[SO₃⁻X⁺]ₙ (la),

   worin
   Q für einen n-wertigen Rest der Basisstruktur entsprechend Formel I steht;
   X⁺ für H⁺ oder das Äquivalent M^{m+}/m eines m-wertigen Metallkations oder ein Ammoniumion mit der Struktur N⁺R¹R²R³R⁴ steht,
   als Pigmentsynergisten.

EP 486 531 B1 beschreibt Sulfonsäuregruppen enthaltende Perylenverbindungen, speziell das N-Methy-N-ethan-2-sulfonsäure-perylentetracarbonsäurediimid, deren Verwendung als Fluoreszenzfarbstoffe, als Farbmittel zum Pigmentieren hochmolekularer organischer Materialien sowie allgemein als Pigmentdispergatoren für Basispigmente aus der Klasse der Azo-, Chinacridon- und insbesondere der Perylenverbindungen. EP 0 937 724 A1 beschreibt auch Pigmentzubereitungen, die Perylenverbindungen und ein organiches Basispigment enthalten.

Aufgabe der vorliegenden Erfindung ist die Weiterentwicklung von Pigmentzubereitungen auf Basis von C. I. Pigment Violett 23 (PV23). Ziel ist dabei die Optimierung der koloristischen Eigenschaften, wie Erhöhung der Farbstärke, Glanz und Transparenz bei gleichzeitiger Verbesserung der rheologischen Eigenschaften in Richtung newtonsches Fließverhalten und einwandfreier Lagerstabilität.

Gelöst wird die Aufgabe durch Pigmentzubereitungen enthaltend
a) C. I. Pigment Violett 23 der Formel I als Basispigment, 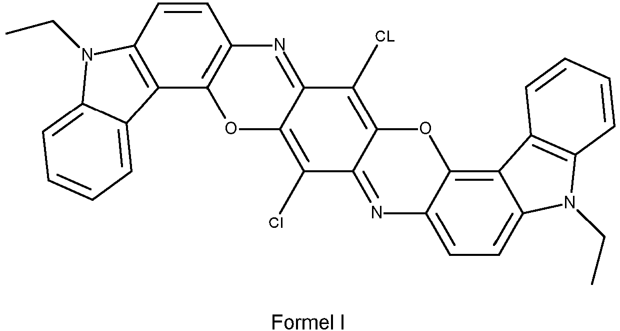
b) eine mindestens eine Sulfonsäuregruppe enthaltende Perylentetracarbonsäuredimid-Verbindung der allgemeinen Formel II als Pigmentsynergisten 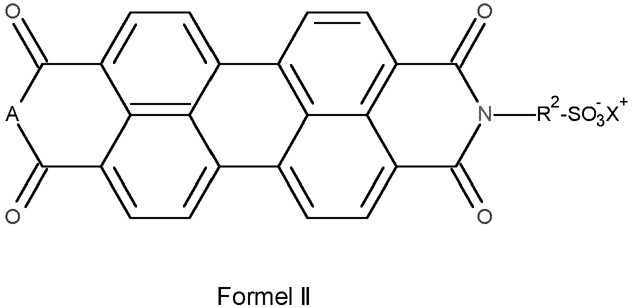 worin bedeuten:
   - A: einen bivalenten Rest >NR¹ oder >N-R²-SO₃⁻X⁺
   - R¹: ein Wasserstoffatom oder eine C₁-C₃₀-Alkylgruppe, bevorzugt eine C₁-C₁₈-Alkyl- und insbesondere eine C₁-C₄-Alkylgruppe, oder eine Arylgruppe, bevorzugt Phenyl, wobei die Arylgruppe unsubstituiert oder durch Halogen wie Chlor oder Brom, Sulfo, C₁-C₄-Alkyl wie Methyl oder Ethyl, C₁-C₄-Alkoxy wie Methoxy oder Ethoxy, oder Phenylazo ein- oder mehrfach substituiert sein kann, beispielsweise Mesitylyl,
   - R²: eine geradkettige oder verzweigte C₁-C₆-Alkylengruppe, insbesondere Ethylen oder Propylen,
   - X⁺: NR³R⁴R⁵R⁶⁺ mit
   - R³, R⁴, R⁵, R⁶: H, unverzweigtes oder verzweigtes C₁-C₃₀-Alkyl, Phenyl oder Phenyl-C₁-C₆-alkyl, beispielsweise Benzyl.

Die erfindungsgemäßen Pigmentzubereitungen zeichnen sich durch hohe Farbstärke, hohen Glanz, hohe Transparenz, sehr gute rheologische Eigenschaften, sowie eine sehr gute Verträglichkeit mit esterreichen Lösemittelgemischen aus.

Die gute Eignung der Sulfonsäuregruppe enthaltende Perylentetracarbonsäuredimid-Verbindung der allgemeinen Formel II als Pigmentsynergisten für C. I. Pigment Violett 23 war wegen der großen strukturellen Verschiedenheit von Dioxazinverbindungen wie PV23 einerseits und Perylenverbindungen anderseits sehr überraschend.

In einer bevorzugten Pigmentzubereitung ist in Formel II R¹ Methyl und R² C₂-Alkylen. Speziell bevorzugt ist das Ammoniumsalz des N-Methy-N-ethan-2-sulfonsäure-perylentetracarbonsäurediimid.

In einer weiteren bevorzugten Pigmentzubereitung sind R³ Hexadecyl und R⁴, R⁵ und R⁶ Methyl.

In einer weiteren bevorzugten Pigmentzubereitung sind R³ und R⁴ Hexadecyl und/oder Octadecyl, sowie R⁵ und R⁶ Methyl.

Der Pigmentsynergist der allgemeinen Formel II wird vorzugsweise aus einer entsprechenden, mindestens eine Sulfonsäuregruppe enthaltenden, Perylentetracarbonsäurediimid-Verbindung der allgemeinen Formel III 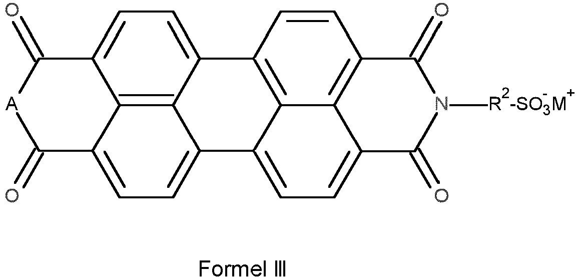 worin M⁺ H⁺, ein Metallkation oder das Äquivalent M^{m+}/m eines m-wertigen Metallkations bedeutet, und einer entsprechenden Ammoniumhalogenid-Verbindung NR³R⁴R⁵R⁶⁺ Hal⁻ in der Pigmentzubereitung selbst erzeugt. Bevorzugtes Halogenid ist das Chlorid.

Geeignete Metallkationen M⁺ bzw. M^{m+} sind Li⁺, Na⁺, K⁺, Mg²⁺, Ca²⁺, Sr²⁺, Ba²⁺, Mn²⁺, Cu²⁺, Ni²⁺, Cd²⁺, Co²⁺, Zn²⁺, Fe²⁺, Al³⁺, Cr³⁺ oder Fe³. Bevorzugt sind Na⁺ und K⁺.

Das Ansetzen der beanspruchten Pigmentzubereitungen kann auf verschiedene Weise erfolgen. So können die Synergisten erfindungsgemäß im Verlauf des Herstellungsverfahrens der Zubereitung dem Basispigment als wässrige bzw. wässriglösemittelhaltige Suspension der Einzelkomponenten oder deren Mischung, als wasserfeuchter Presskuchen vor der Trocknung oder als bereits trockenes Pulver zugesetzt werden, und zwar
a) dem feuchten Presskuchen des Basispigments,
b) im Rahmen eines Feinverteilungsprozesses des grobkristallinen Rohpigments, wie z.B. bei der
   b1) Trockenmahlung mit und ohne Salz,
   b2) Nassmahlung mit oder ohne Lösungsmittel,
c) dem schon feinteiligen Rohpigment vor, während oder nach einer anschließenden Lösungsmittelfinish-Behandlung,
d) bei einer mechanischen Vermischung im trockenen Zustand, wie z.B. von gemahlenen Synergisten mit dem Pigmentpulver, und schließlich
e) erst bei der Einarbeitung des Pigments in das in Aussicht genommene Anwendungsmedium.

Als bevorzugte Techniken zur Erzeugung der Pigmentzubereitungen werden erfindungsgemäß die Trocken- und Nassmahlung in Betracht gezogen. Die Zugabe der Pigmentsynergisten lässt sich beispielsweise im Verlauf einer Trockenmahlung des Rohpigments mit oder ohne zusätzliche Mahlhilfsmittel auf einer Roll- oder Schwingmühle, oder im Zuge einer Nassmahlung des Rohpigments in wässrigem, wässrig-organischem oder organischem Mahlmedium auf einer Schwing-, Roll- oder Perlmühle durchführen. Als gleichfalls zuverlässig hat sich die Anwendung der Synergisten vor, während, oder nach dem Druckfinish für das zugrundeliegende Pigment in wässrigem, oder wässrig-organischem Medium erwiesen.

Die bei der Herstellung der Pigmentzubereitungen nach dieser Erfindung dem Basispigment a) zuzusetzenden Mengen an Pigmentsynergisten b) sind - soweit davon die angestrebte Pigmentqualität nicht negativ beeinflusst wird - in Richtung auf einen bestimmten Maximalwert nicht beschränkt, doch kommt im allgemeinen ein Gehalt von 0,1 bis 30 Gew.-%, insbesondere von 0,5 bis 5 Gew.-% des einzelnen Synergisten, berechnet auf das jeweilige Pigmentgewicht, in Betracht.

Die beanspruchten Pigmentzubereitungen können neben Pigment a) und Pigmentsynergisten b) noch weitere Bestandteile enthalten, wie beispielsweise Tenside, Harze oder Antistaubmittel.

Pigmentzubereitungen im Sinne der vorliegenden Erfindung bestehen also im Wesentlichen aus
a) 99,5 bis 70 Gew.-% Basispigment der Formel I,
b) 0,5 bis 30 Gew.-% des Pigmentsynergisten der Formel II,
c) 0 bis 5 Gew.-% eines nichtionischen Tensids, und
d) 0 bis 5 Gew.-% von üblichen Zusatzstoffen,
wobei die Anteile der jeweiligen Komponenten auf das Gesamtgewicht (100 %) der Zubereitung bezogen sind.

Pigmentzubereitungen auf Basis von C.I. Pigment Violet 23 mit hervorragenden coloristischen und rheologischen Eigenschaften lassen sich auf einfache Weise erzeugen, wenn man die beim Trocknen des von der Pigmentsynthese herstammenden feuchten Presskuchens in grobkristallinem Zustand entstandenen PV 23-Rohpigment in Gegenwart des Pigmentsynergisten zunächst in einem flüssigen Medium auf einer Rührwerkskugelmühle bis zum Erreichen eines gewünschten Feinverteilungsgrades der resultierenden Pigmentteilchen nassvermahlt und die so erhaltene Mahlgutsuspension dann direkt, im Falle einer Zwischenisolierung nach deren Wiederaufnahme in einer Flüssigkeit, unter der Beteiligung von organischen Lösemitteln einer üblichen Finish-Behandlung bei erhöhter Temperatur aussetzt, wobei die Zugabe der Pigmentsynergisten zu einem beliebigen Zeitpunkt im Verlauf der beiden zuvor definierten Behandlungsgänge erfolgen kann. Bei den nach dem beanspruchten Verfahren eingeschlagenen Maßnahmen zwecks Formulierung des Basispigments der Formel I werden Feinverteilung und Finish auf einfache und elegante Weise kombiniert.

Für die erfindungsgemäße Herstellung dieser Pigmentzubereitungen ist eine hohe Mahlwirkung erforderlich, die durch den Einsatz einer speziellen Ausführungsform der Rührwerkskugelmühle erreicht wird, in Verbindung mit der Einhaltung spezifizierter Mahl- und Finishbedingungen. Für eine Mahlung der gesuchten Effizienz sind geeignet Rührwerkskugelmühlen, ausgelegt zum diskontinuierlichen oder kontinuierlichen Arbeitsablauf, mit zylinderförmigem oder hohlzylinderförmigem Mahlraum in horizontaler oder vertikaler Bauweise, die mit einer spezifischen Leistungsdichte von über 2,5 kW pro Liter Mahlraum betrieben werden können und deren Rührwerksumfangsgeschwindigkeit über 12 m pro Sekunde beträgt. Die pro Zeiteinheit vom Rührwerk abgegebene Energie wird als Zerkleinerungsarbeit und als Reibungsenergie in Form von Wärme an das Mahlgut übertragen. Zur problemlosen Abführung dieser großen Wärmemenge muss durch konstruktive Vorkehrungen das Verhältnis von Mahlraum zur Mahlraumoberfläche (Kühlfläche) möglichst klein gehalten werden.

Als Mahlkörper dienen Kugeln aus Zirkoniumoxid, Zirkoniummischoxid, Aluminiumoxid oder Quarz vom Durchmesser ≦ 1 mm; zweckmäßig werden solche mit einem Durchmesser von 0,2 bis 1 mm, vorzugsweise 0,3 bis 0,5 mm verwendet.

Beim Einsatz von kontinuierlichen Rührwerkskugelmühlen zum Feinverteilen erfolgt die Abtrennung der Mahlkörper vom Mahlgut vorzugsweise durch Zentrifugalabscheidung, so dass die Trennvorrichtungen von den Mahlkörpern praktisch nicht berührt werden, wodurch man Verstopfungen derselben weitgehend verhindern kann. Die Rührwerkskugelmühlen werden hierbei mit hohem Mahlkörperfüllgrad betrieben. Bei den kontinuierlichen Rührwerkskugelmühlen wird der Mahlraum praktisch vollständig mit Mahlkörpern ausgefüllt.

Die Pigmentkonzentration im Mahlgut sollte bei ≦ 40 Gew.-% liegen, im Allgemeinen 10 bis 35 Gew.-% betragen, vorzugsweise zwischen 10 und 20 Gew.-% sein. Die Mahlung wird in wässrigem, wässrig/organischem oder organischem Medium vom Lösemittel-Typ, vorzugsweise im alkalischen oder neutralen pH-Bereich durchgeführt. Das Mahlgut kann außer der flüssigen Phase und dem Rohpigment noch Pigmentdispergatoren, Tenside und andere Zuschlagstoffe aufweisen. Die Verweilzeit des Mahlguts in der Rührwerkskugelmühle liegt je nach geforderter Feinheit im Allgemeinen zwischen 10 und 60 Minuten; sie beläuft sich zweckmäßig auf eine Dauer von 10 bis 45 Minuten, vorzugsweise 10 bis 30 Minuten. Die Mahlung wird bei Temperaturen im Bereich von 0° bis 100°C, zweckmäßig bei einer Temperatur zwischen 10° und 60°C, vorzugsweise bei 20° bis 50°C durchgeführt.

Als flüssiges Mahlmedium werden Wasser; mit Wasser mischbare C₁-C₄-Alkanole wie z.B. Methanol, Ethanol, n-Propanol, Isopropanol, n-Butanol, tert.-Butanol oder Isobutanol; cyclische Alkanole wie z.B. Cyclohexanol; C₁-C₆-Dialkylketone wie z.B. Aceton, Diethylketon, Methylisobutylketon oder Methylethylketon; Ether und Glykolether wie z.B. Methylglykol, Ethylglykol, Butylglykol, Ethyldiglykol oder Methoxybutanol; aliphatische Säureamide wie z.B. Formamid oder Dimethylformamid; cyclische Carbonsäureamide wie z.B. N-Methylpyrrolidon, Valero- und Caprolactam, heterocyclische Basen wie z.B. Pyridin, Morpholin oder Picolin; sowie Dimethylsulfoxid oder Mischungen dieser Lösungsmittel mit Wasser verwendet; insbesondere ist eine Lösung von Isobutanol in Wasser, z.B. 5 %iges Isobutanol bevorzugt.

Die Zugabe der Pigmentsynergisten kann auf einmal oder in mehreren Portionen erfolgen; sie kann vor, während oder nach der Mahlung, aber auch vor, während oder nach dem Finish vorgenommen werden. Der geeignetste Zeitpunkt muss zuvor durch orientierende Versuche ermittelt werden. Die Zugabe kann in trockenem Zustand, in Form eines feuchten Presskuchens oder als wässrige, bzw. wässrig, lösemittelhaltige Suspension der Einzelkomponenten oder deren Mischung stattfinden.

Gegenstand der Erfindung ist auch die Verwendung der Pigmentzubereitungen zum Pigmentieren von hochmolekularen organischen Materialien natürlicher oder synthetischer Herkunft in Form plastischer Massen, Schmelzen, Spinnlösungen, Lacken, Anstrichfarben oder Druckfarben.

Bevorzugt ist die Verwendung zum Pigmentieren (Einfärben) von Druckfarben auf Basis von Nitrocellulose, insbesondere von Verpackungstiefdruck- und Verpackungsflexodruckfarben auf Nitrocellulosebasis. Neben reinen NC-Farben kommen auch PU-, PA-, PVB- und CAB-Bindemittelsysteme zum Einsatz, sowie deren Kombination mit NC-Konzentraten zur Herstellung verschnittener Druckfarben.

Gegenstand der Erfindung ist auch die Verwendung der Pigmentzubereitungen zum Pigmentieren von Farbfiltern.

Die Erfindung wird durch die nachstehenden Beispiele näher erläutert.

### Beispiele

### Prüfung von Pigmenten im NC-Alkohol-Tiefdruck bei erhöhter Pigmentkonzentration

Geprüft werden Pigmente, die vor allem in Verpackungstiefdruck- und Verpackungsflexodruckfarben auf Nitrocellulosebasis eingesetzt werden, wie folgt.

### Herstellung einer Schüttelmaschinen-Anreibung

Zunächst wird ein Lösemittelgemisch aus 98 Gew.-% Ethanol und 2,0 Gew.-% Ethylacatat hergestellt. Von Standard und Probe(n) wird jeweils eine Farbe wie folgt hergestellt: und mit der Schüttelmaschine bei 660 U/min 45 min. lang dispergiert.

Nach der Dispergierung in der Schüttelmaschine werden die Farbkonzentrate zum Abtrennen der Kugeln über ein Sieb in einen Plastikbecher abgefüllt.

**Tabelle 1: Zusammensetzung des Druckfarbenkonzentrats**

| Pigment | Pigmentkonz. [%] | Pigmentmenge [g] | NC-Firnis (25% 75% Ethanol) [g] | Lösemittelgemisch (98% Ethanol/2% Ethylacetat) [g] | Pigmentkonz. für Farbmessung [%] | Zahn-Cup (mm) **( siehe Bemerkung) |
|---|---|---|---|---|---|---|
| P.V.23 | 22 | 22,00 | 40,00 | 38,00 | 2,2 | 3 |
| (Pigment:Bindemittel = 1:0,45) | | | | | | |

### Bestimmung von Glanz und Transparenz

Die Druckfarbe wird wie folgt hergestellt: In einem 150 ml Plastikbecher werden 15 g Dispergierkonzentrat und 0,75 g Solvenon PM (1-Methoxy 2-Propanol) eingewogen, danach 3 min. im "Disperser DAS 200 K" geschüttelt.

Die Farbkonzentrate von Typ und Probe werden nebeneinander auf Prüfpapier Leneta WF weiß (Glanz) und Leneta WF mit schwarzem Balken (Transparenz) mittels des KCC-Rakelauftragsgeräts (Nassfilmstärke 12 µm) möglichst streifenfrei aufgezogen.

Die Beurteilung erfolgt visuell. Dabei ist es wichtig, dass die Beurteilung der Transparenz unter Ausschaltung des Glanzes erfolgt.

**Tabelle 2: Bewertungsskala für Transparenz**

| Visuelle Bewertungsstufe | | Visuelle Abweichung |
|---|---|---|
| etwa wie | /=/ | |
| Spur | 1 | |
| etwas | 2 | |
| merklich | 3 | transparenter (tra) |
| deutlich | 4 | deckender (de) |
| wesentlich | 5 | |
| bedeutend | 6 | |

### Bestimmung der Auslaufzeit

Die Bestimmung der Viskosität erfolgt an den Druckfarbenkonzentraten ohne "Solvenon PM". Hierfür wird eine Mindestmenge von 50 g Druckfarbenkonzentrat benötigt. Die Dispergierkonzentrate zuvor bei 23°C für 60 Minuten im Wasserbad temperieren.

Das temperierte Druckfarbenkonzentrat wird wie folgt mit dem entsprechend ausgewählten Zahn-Cup-Auslaufbecher mittels Cup-Timer 243T (elektronisches Messgerät zur Auslaufdauer) gemessen.

### Herstellung von verschnittenen Druckfarben für die farbmetrische Bestimmung

| | |
|---|---|
| 5,0 g | Druckfarbenkonzentrat (siehe oben) |
| 45,0 g | Firnis 1 (NC-Alkoholverschnittfirnis) |

Für die farbmetrische Bestimmung wird das Pigmentkonzentrat mit NC-Verschnittfirnis versetzt, um den Pigmentgehalt auf 2% einzustellen. Unter diesen Voraussetzungen ist das Verhältnis von Absorption und Reflexion der verschnittenen Druckfarbe günstig für eine farbmetrische Vermessung mit Hilfe eines Spektralphotometers.

Die Druckfarben von Typ und Probe werden nebeneinander auf Apco II/II Prüfpapier A weiß mit dem KCC-Rakelauftragsgeräts Stufe 7 mit Gewicht, Stab Nr.2 streifenfrei aufgetragen. Zur farbmetrischen Ermittlung der coloristischen Eigenschaften nach CIELAB (Farbstärke, Farbton und Reinheit) werden die oben beschriebenen Draw-Downs an jeweils zwei unterschiedlichen Messpositionen mittels einer Schablone mit dem Spektralphotometer mit 3,7 % Glanzabzug gemessen und ausgewertet.

### Überprüfung der Druckfarbenkonzentrate auf deren Verträglichkeit bei Verdünnung mit Ethylacetat

Die Druckfarbenkonzentrate werden in einen 150 ml PE-Becher mit Steckdeckel eingewogen. Ein Lösemittelgemisch bestehend aus 50 Gew.-% Ethanol und 50 Gew.% Ethylacetat wird unter Rühren zugegeben und von Hand durchgeschüttelt.

**Tabelle 3: Zusammensetzung der Esterstabilitätsfarben**

| Pigment | | DruckfarbenKonzentrat (22% Pigment) [g] | Lösemittel-gemisch (Ethanol: Ethylacetat 1:1) [g] | Pigmentkonzentration der Esterstabilitätsfarben [%] | Zahn-Cup (mm) |
|---|---|---|---|---|---|
| P.V.23 Hostaperm-Violett P-RL | | 70,00 | 30,00 | 15,4 | 2 |

Die mit dem Lösemittelgemisch verdünnten Esterstabilitätsfarben 60 min. werden im Wasserbad temperiert (23°C).

Danach erfolgt jeweils zuerst die visuelle Beurteilung der Druckfarben bezüglich der Esterverträglichkeit, wie folgt:
- Viskositätsänderung (niedrig-, mittel- oder hochviskos)
- Klumpenbildung
- Phasentrennung

### Bestimmung der Auslaufzeit:

Die temperierten Esterstabilitätsdruckfarben werden nach 24 h zur Bestimmung von Viskositäts-, Thixotropie- und Fließverhalten mit dem Rotationsviskosimeter (Anordnung Kegel-Platte) gemessen.

### Mikroskopische Beurteilung der Flockungsstabilität:

Flockungsstabilität der Esterstabilitätsdruckfarben mit einem Mikroskop bei 110-facher Vergrößerung beurteilen. Bewertungsskala von 1 (schlecht) bis 5 (sehr gut).

### Auswertung

Die Auswertung der Farbeigenschaften wird visuell und farbmetrisch nach der CIELAB Formel (DIN ISO 18314-2) vorgenommen.

### Druckfarbe (verschnitten):

Drawdown auf APCO II/II Papier A: Farbmetrische Bestimmung von Farbstärke, Farbton (dH), Chroma (dC).

**Tabelle 4: Verwendete Komponenten**

| Handelsname | CAS-Nr. | Chemischer Name | Hersteller | Form |
|---|---|---|---|---|
| Arquad 16-29 | 203-928-6 | Hexadecyltrimethylammoniumchlorid | Akzo Nobel | 29% in Wasser |
| Modifier#3C | 28901-96-4 | Kupferphthalocyanin-Monosulfonsäure | Heubach | feuchter Presskuchen |
| Genamin DSAP | 92129-33-4 | Di-C₁₆-₁₈-alkyldimethylammoniumchlorid | Clariant | 90% Prills |
| HPP-Additiv | 135934-43-9 | N-Methy-N-ethan-2-sulfonsäure-perylentetracarbonsäurediimid | Heubach | trockenes Pulver |
| Solsperse 5000S | 70750-63-9 | Monosulfoniertes Kupferphthalocyanindioctadecyldimethylammonium-Salz | Lubrizol | trockenes Pulver |
| AQ-SO₃Na*H₂O | 153277-35-1 | Anthrachinon-2-sulfonsäure, Na-Salz | Sigma-Aldrich | trockenes Pulver |

### Beispiel 1

Durchführung analog Beispiel 4 unter Verwendung von 2,62 g HPP-Additiv (89,6%) und 4,85 g Arquad 16-29 (29 %ig).

### Beispiel 2

Durchführung analog Beispiel 4 unter Verwendung von 2,36 g HPP-Additiv (89,6%), 4,37 g Arquad 16-29 (29 %ig) und 0,35 g Solsperse 5000S.

### Beispiel 3

### Zusatz einer Additivkomponente vor dem Mahlen

In eine Rührwerkskugelmühle vom Typ Drais DCP SF12 (Hersteller: Draiswerke GmbH, Mannheim), die mit 3522 g Zirkoniumoxydperlen vom Durchmesser 0,35 - 0,45 mm als Mahlkörper gefüllt ist, werden 560 g Rohpigment (Pigment Violet 23) und 15,72 g HPP-Additiv (89,6 %ig), suspendiert in einer Mischung aus 3430 g Wasser und 10,0 g Natronlauge 33%ig, eingetragen und darin bei einer Drehzahl von 1470 Upm, einem Durchsatz von 600 ml/min und einem Leistungseintrag von 4 kW bei 35°C 52 Minuten gemahlen. Jetzt werden noch 17,17 g Genamin DSAP (90 %ig) zugesetzt und eine Stunde bei 25°C verrührt.

Zum Finish werden 500 g der so erhaltenen Perlmahlsuspension durch Zugabe von Ameisensäure auf einen pH-Wert von 6,5 gestellt, mit 150 g wasserhaltigem Isobutanol (85 %ig) versetzt und zunächst 5 h bei 25°C nachgerührt. Nun erwärmt man das Gemisch in einem Autoklaven auf 130°C, hält es 5 h bei dieser Temperatur und destilliert dann das Isobutanol durch Erhitzen bis auf 100°C am Übergang azeotrop ab. Nach dem Abkühlen auf 60°C wird das so erhaltene Pigment durch Filtration der wässrigen Suspension isoliert, mit demineralisiertem Wasser auf einen Leitwert < 100 µS gewaschen und bei 80°C getrocknet.

### Beispiel 4

### Variante Zusatz der Additivkomponenten nach dem Finish

In eine Rührwerkskugelmühle vom Typ Drais DCP SF12 (Hersteller: Draiswerke GmbH, Mannheim), die mit 3522 g Zirkoniumoxydperlen vom Durchmesser 0,35 - 0,45 mm als Mahlkörper gefüllt ist, werden 560 g Rohpigment (Pigment Violet 23), suspendiert in einer Mischung aus 3311 g Wasser und 129 g Natronlauge 33%ig, eingetragen und darin bei einer Drehzahl von 1470 Upm, einem Durchsatz von 600 ml/min und einem Leistungseintrag von 4 kW bei 35°C 52 Minuten gemahlen.

Zum Finish werden 500 g der so erhaltenen Perlmahlsuspension durch Zugabe von Ameisensäure auf einen pH-Wert von 6,5 gestellt, mit 150 g wasserhaltigem Isobutanol (85 %ig) versetzt und zunächst 5 h bei 25°C nachgerührt. Nun erwärmt man das Gemisch in einem Autoklaven auf 130°C, hält es 5 h bei dieser Temperatur und destilliert dann das Isobutanol durch Erhitzen bis auf 100°C am Übergang azeotrop ab. Nach dem Abkühlen auf 60°C wird der Destillationsrückstand mit 1,96 g HPP-Additiv (89,6 %ig) versetzt und dann nach einstündigem Verrühren noch 2,15 g Genamin DSAP (90 %ig) zugefügt, worauf man abschließend noch 2 weitere Stunden bei 60°C nachrührt. Das so erhaltene Pigment wird durch Filtration der wässrigen Suspension isoliert, mit demineralisiertem Wasser auf einen Leitwert < 100 µS gewaschen und bei 80°C getrocknet.

Mit gleichem Ergebnis kann auch eine vorab hergestellte Mischung der beiden Additivkomponenten in Isopropanol / Wasser zugesetzt werden.

### Beispiel 5

### Variante Zusatz der Additivkomponenten vor dem Finish

In eine Rührwerkskugelmühle vom Typ Drais DCP SF12 (Hersteller: Draiswerke GmBH, Mannheim), die mit 3522 g Zirkoniumoxydperlen vom Durchmesser 0,35 - 0,45 mm als Mahlkörper gefüllt ist, werden 560 g Rohpigment (Pigment Violet 23), suspendiert in einer Mischung aus 3311 g Wasser und 129 g Natronlauge 33%ig, eingetragen und darin bei einer Drehzahl von 1470 Upm, einem Durchsatz von 600 ml/min und einem Leistungseintrag von 4 kW bei 35°C 52 Minuten gemahlen. Nach beendeter Mahlung werden, 1 h bei 25°C verrührt.

Zum Finish werden 500 g der so erhaltenen Perlmahlsuspension durch Zugabe von Ameisensäure auf einen pH-Wert von 6,5 gestellt, 1,96 g HPP-Additiv (89,6 %ig) zugesetzt, 1 h bei 25°C verrührt, anschließend 2,15 g Genamin DSAP (90 %ig) zugefügt und nochmals eine Stunde bei 25°C nachgerührt. Dann wird mit 150 g wasserhaltigem Isobutanol (85 %ig) versetzt und zunächst 5 h bei 25°C nachgerührt. Nun erwärmt man das Gemisch in einem Autoklaven auf 130°C, hält es 5 h bei dieser Temperatur und destilliert dann das Isobutanol durch Erhitzen bis auf 100°C am Übergang azeotrop ab. Nach dem Abkühlen auf 60°C wird das so erhaltene Pigment durch Filtration der wässrigen Suspension isoliert, mit demineralisiertem Wasser auf einen Leitwert < 100 µS gewaschen und bei 80°C getrocknet.

### Vergleichsbeispiel V2

Durchführung analog Beispiel 4, aber sofortige Aufarbeitung ohne Additivzusätze.

### Vergleichsbeispiel V3

Durchführung analog Beispiel 4 unter Verwendung von 11,22 g Modifier#3C (22,3 %ig) und 4,21 g Arquad 16-29 (29 %ig); Modifier#3C wird als wässrige, mit verdünnter Natronlauge neutralisierte Suspension eingesetzt.

### Vergleichsbeispiel V4

Durchführung analog Beispiel 3 unter Einsatz von 28 g Solsperse 5000S an Stelle des HPP-Additiv; der Zusatz von Genamin DSAP entfällt in dieser Ausführungsform.

### Vergleichsbeispiel V5

Durchführung analog Beispiel 4 unter Verwendung von 2,12 g Anthrachinon-2-Natriumsulfonat Hydrat (97 %ig) und 6,92 g Arquad 16-29 (29 %ig).

### Vergleichsbeispiel V6

Durchführung analog Beispiel 4, aber ohne Zusatz von Genamin DSAP. Der 2,2% Pigment-Drawdown ist in der visuellen koloristischen Prüfung gegenüber dem Referenzbeispiel V1 sowohl roter (6 redder) als auch stumpfer (2 duller).

**Tabelle 5 Transparenz, Glanz, Viskosität**

| Konzentrat 22 % | | | | | | | | |
|---|---|---|---|---|---|---|---|---|
| Beispiel | Transparenz (tra = transparenter) | Glanz 60° Standard | Glanz 60° Beispiel | Viskosität D = 5 s⁻¹ | Viskosität D = 10 s⁻¹ | Viskosität D = 30 s⁻¹ | Viskosität D = 60 s⁻¹ | |
| | | | | [Pa•s] | | | | |
| V1 | Referenz | --- | --- | 12,19 | 7,93 | 0,61 | 0,55 | Hostaperm Violet P-RL-Standard |
| V2 | 5 tra | 44,2 | 95,5 | 1,04 | 0,67 | 0,34 | 0,28 | Keine Additivierung |
| 1 | 5 tra | 67,5 | 105,3 | 8,30 | 5,15 | 1,14 | 0,86 | Arquad 16-29 \| HPP-Additiv |
| V3 | 5 tra | 64,3 | 97,7 | 9,89 | 5,00 | 0,82 | 0,68 | Arquad 16-29 \| Modifier#3C |
| V4 | 5 tra | 65,2 | 97,0 | 5,25 | 3,51 | 0,68 | 0,55 | Solsperse 5000S |
| V5 | 5 tra | 68,2 | 97,5 | 4,13 | 3,12 | 0,56 | 0,48 | Arquad 16-29 \| AQ-SO3H |
| V6 | 2 de | 68,5 | 75,9 | 1,95 | 1,54 | 0,86 | 0,59 | HPP-Additiv |
| 2 | 5 tra | 72,0 | 101,6 | 5,42 | 3,54 | 0,82 | 0,64 | Arquad 16-29 \| HPP-Additiv |
| | | | | | | | | Solsperse 5000S |
| 3 | 5 tra | 69,6 | 97,2 | 2,94 | 1,88 | 0,57 | 0,44 | Genamin DSAP \| HPP-Additiv |
| 4 | 5 tra | 58,0 | 81,0 | 1,98 | 1,38 | 0,45 | 0,36 | Genamin DSAP \| HPP-Additiv |
| 5 | 5 tra | 58,0 | 83,0 | 1,64 | 1,16 | 0,41 | 0,33 | Genamin DSAP \| HPP-Additiv |

| | | | | | | | | |
|---|---|---|---|---|---|---|---|---|
| *) Laut DIN 67530 erfolgt die Glanzmessung im Bereich von 10-70 Glanzeinheiten (Mittelglanz) bei einem Messwinkel von 60°, im Hochglanzbereich >70 Glanzeinheiten bei 20°. Bei den hier aufgeführten Beispielen befinden sich sämtliche Messwerte im Bereich >80 im Gegensatz zum Standard, welcher sich im mittleren Glanzbereich bewegt. Um den Glanzgrad einheitlich bewerten zu können und eine bessere Vergleichbarkeit zwischen Standard und Beispiel zu gewährleisten, hat man abweichend von der Norm den Glanzwinkel für die Messung der Beispiele bei 60° belassen. | | | | | | | | |

**Tabelle 6 Ergebnisse der koloristischen Prüfung**

| 2,2% Pigment Drawdown | | | | |
|---|---|---|---|---|
| Beispiel | Farbstärke [%] | dH | dC | |
| V1 | 100 | Referenz | Referenz | Hostaperm Violet P-RL |
| V2 | 106 | 3,67 | 1,99 | keine Additivierung |
| 1 | 100 | 3,09 | -0,9 | Arquad 16-29 \| HPP-Additiv |
| V3 | 100 | 0,75 | -0,28 | Arquad 16-29 \| Modifier#3C |
| V4 | 101 | 0,87 | 0,30 | Solsperse 5000S |
| V5 | 101 | 2,22 | 0,82 | Arquad 16-29 + AQ-SO3H |
| V6 | 101 | 2,54 | -0,77 | HPP-Additiv |
| 2 | 102 | 3,68 | 0,16 | Arquad 16-29 \| HPP-Additiv |
| | | | | Solsperse 5000S |
| 3 | 101 | 3,84 | 0,39 | Genamin DSAP \| HPP-Additiv |
| 4 | 100 | 2,92 | -0,68 | Genamin DSAP \| HPP-Additiv |
| 5 | 100 | 2,88 | -0,61 | Genamin DSAP \| HPP-Additiv |

**Tabelle 7 Esterverträglichkeit**

| Flockulation: 5= einwandfrei/ keine Flockulation 1 = total flockuliert | | | | | | |
|---|---|---|---|---|---|---|
| Pigment | Flockungsstabilität | Nach 24h (23°C) | | | | Additivierung |
| | | Viskosität D = 5 s⁻¹ | Viskosität D = 10 s⁻¹ | Viskosität D = 30 s⁻¹ | Viskosität D = 60 s⁻¹ | |
| | | [Pa•s] | | | | |
| V1 | 3 | 0,15 | 0,16 | 0,13 | 0,10 | Hostaperm Violet P-RL |
| V2 | | | | | | ohne Additivierung |
| 1 | 4 | 0,48 | 0,41 | 0,24 | 0,15 | Arquad 16-29 \| HPP-Additiv |
| V3 | 4 | 2,33 | 1,22 | 0,46 | 0,24 | Arquad 16-29 \| Modifier#3C |
| V4 | 2 | 0,44 | 0,34 | 0,19 | 0,13 | Solsperse 5000S |
| V5 | 1 | 3,80 | 2,02 | 0,60 | 0,36 | Arquad 16-29 + AQ-SO3H |
| 2 | 5 | 0,16 | 0,13 | 0,09 | 0,08 | Arquad 16-29 \| HPP-Additiv |
| | | | | | | Solsperse 5000S |
| 3 | 5 | 0,22 | 0,18 | 0,11 | 0,09 | Genamin DSAP \| HPP-Additiv |
| 4 | 5 | 1,19 | 0,09 | 0,08 | 0,06 | Genamin DSAP \| HPP-Additiv |
| 5 | 5 | 0,19 | 0,19 | 0,14 | 0,10 | Genamin DSAP \| HPP-Additiv |

## Patentansprüche

1. Pigmentzubereitung enthaltend
a) C. I. Pigment Violett 23 der Formel I als Basispigment, 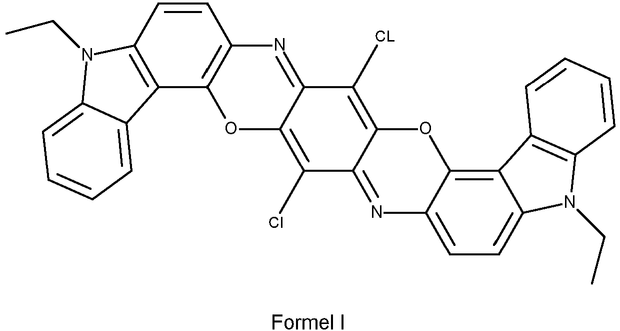
b) eine mindestens eine Sulfonsäuregruppe enthaltende Perylentetracarbonsäuredimid-Verbindung der allgemeinen Formel II als Pigmentsynergisten 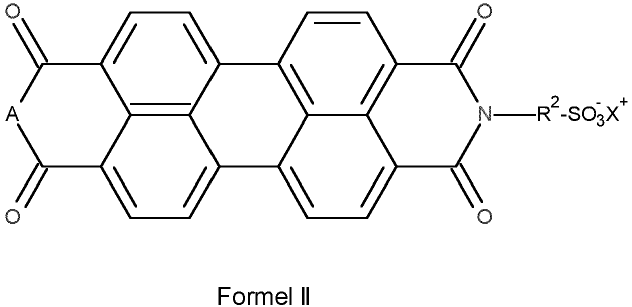 worin bedeuten:
A einen bivalenten Rest >NR¹ oder >N-R²-SO₃⁻X⁺
R¹ ein Wasserstoffatom oder eine C₁-C₃₀-Alkylgruppe, bevorzugt eine C₁-C₁₈-Alkyl- und insbesondere eine C₁-C₄-Alkylgruppe, oder eine Arylgruppe, bevorzugt Phenyl, wobei die Arylgruppe unsubstituiert oder durch Halogen wie Chlor oder Brom, Sulfo, C₁-C₄-Alkyl wie Methyl oder Ethyl, C₁-C₄-Alkoxy wie Methoxy oder Ethoxy, oder Phenylazo ein- oder mehrfach substituiert sein kann,
R² eine geradkettige oder verzweigte C₁-C₆-Alkylengruppe, insbesondere Ethylen oder Propylen
X⁺ NR³R⁴R⁵R⁶⁺ mit
R³, R⁴, R⁵, R⁶ H, unverzweigtes oder verzweigtes C₁-C₃₀-Alkyl, Phenyl oder Phenyl-C₁-C₆-alkyl.

2. Pigmentzubereitung nach Anspruch 1, **dadurch gekennzeichnet, dass** R¹ Methyl und R² C₂-Alkylen ist.

3. Pigmentzubereitung nach Anspruch 1 oder 2, **dadurch gekennzeichnet, dass** R³ Hexadecyl und R⁴, R⁵ und R⁶ Methyl sind.

4. Pigmentzubereitung nach Anspruch 1 oder 2, **dadurch gekennzeichnet, dass** R³ und R⁴ Hexadecyl und/ oder Octadecyl und R⁵ und R⁶ Methyl sind.

5. Pigmentzubereitung nach einem der Ansprüche 1 bis 4, **dadurch gekennzeichnet, dass** die Verbindung der allgemeinen Formel II aus einer mindestens eine Sulfonsäuregruppe enthaltende Perylentetracarbonsäuredimid-Verbindung der allgemeinen Formel III 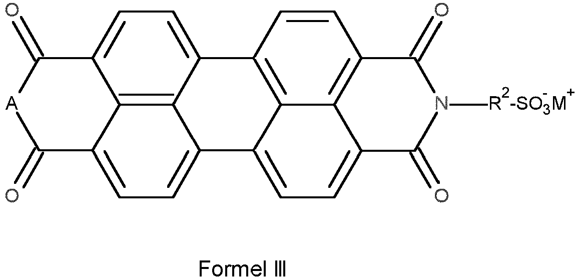
worin M⁺ H⁺, ein Metallkation oder das Äquivalent M^{m+}/m eines m-wertigen Metallkations bedeutet,
und einer entsprechenden Ammoniumhalogenid-Verbindung NR³R⁴R⁵R⁶⁺ Halin der Pigmentzubereitung erzeugt wird.

6. Pigmentzubereitungen gemäß einem der Ansprüche 1 bis 5 enthaltend
a) 99,5 bis 70 Gew.-% Basispigment der Formel I,
b) 0,5 bis 30 Gew.-% des Synergisten der Formel II,
c) 0 bis 5 Gew.-% eines nichtionischen Tensids, und
d) 0 bis 5 Gew.-% von üblichen Zusatzstoffen,
wobei die Anteile der jeweiligen Komponenten auf das Gesamtgewicht der Zubereitung bezogen sind.

7. Verfahren zur Herstellung der Pigmentzubereitung gemäß einem der Ansprüche 1 bis 6, **dadurch gekennzeichnet, dass** die Oberflächenstruktur des Basispigments a) mit einem Pigmentsynergisten b) gleichmäßig beschichtet wird.

8. Verfahren gemäß Anspruch 7, **dadurch gekennzeichnet, dass** man den Pigmentsynergisten b) dem grobkristallinen Roh-Basispigment a) bei dessen Feinverteilung im Verlauf einer Trockenmahlung oder Nassmahlung zusetzt.

9. Verfahren gemäß Anspruch 7, **dadurch gekennzeichnet, dass** man den Pigmentsynergisten b) dem wasserfeuchten Presskuchen des Basispigments a) zusetzt.

10. Verfahren gemäß Anspruch 7, **dadurch gekennzeichnet, dass** man den Pigmentsynergisten b) dem feinteiligen Basispigment a) im Verlauf einer Lösungsmittelfinish-Behandlung zusetzt.

11. Verfahren gemäß Anspruch 7, **dadurch gekennzeichnet, dass** man den Pigmentsynergisten b) in trockenem Zustand mit dem feinteiligen Basispigment a) mechanisch vermischt.

12. Verwendung der Pigmentzubereitungen gemäß einem der Ansprüche 1 bis 6 zum Pigmentieren von hochmolekularen organischen Materialien natürlicher oder synthetischer Herkunft in Form plastischer Massen, Schmelzen, Spinnlösungen, Lacken, Anstrichfarben oder Druckfarben.

13. Verwendung gemäß Anspruch 12 zum Pigmentieren (Einfärben) von Druckfarben auf Basis von Nitrocellulose.

14. Verwendung der Pigmentzubereitungen gemäß einem der Ansprüche 1 bis 6 zum Pigmentieren von Farbfiltern.

## Claims

1. Pigment formulation comprising
a) C. I. Pigment Violet 23 of the formula I as base pigment, 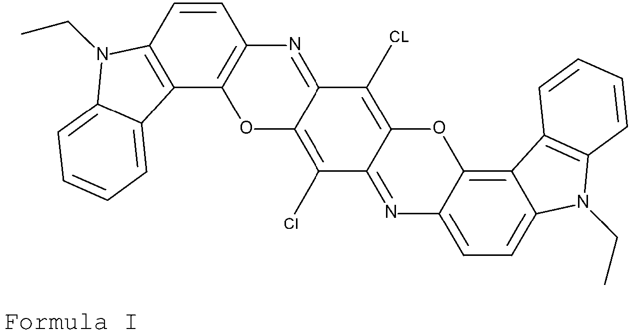
b) a perylenetetracarboximide compound that contains at least one sulfo group and is of the general formula II as pigment synergist 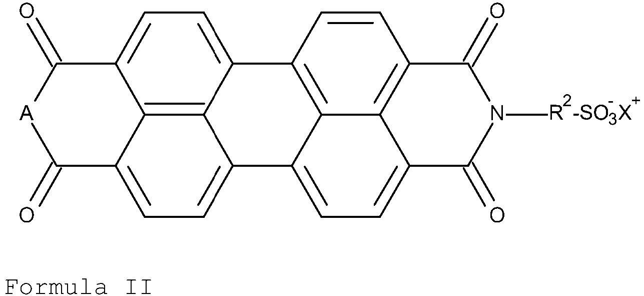 in which:
A is a bivalent >NR¹ or >N-R²-SO₃⁻X⁺ radical
R¹ is a hydrogen atom or a C₁-C₃₀-alkyl group, preferably a C₁-C₁₈-alkyl and especially a C₁-C₄-alkyl group, or an aryl group, preferably phenyl, where the aryl group may be unsubstituted or mono- or polysubstituted by halogen such as chlorine or bromine, sulfo, C₁-C₄-alkyl such as methyl or ethyl, C₁-C₄-alkoxy such as methoxy or ethoxy, or phenylazo,
R² is a straight chain or branched C₁-C₆-alkylene group, especially ethylene or propylene,
X⁺ is NR³R⁴R⁵R⁶⁺ where
R³, R⁴, R⁵, R⁶ are H, unbranched or branched C₁-C₃₀-alkyl, phenyl or phenyl-C₁-C₆-alkyl.

2. Pigment formulation according to Claim 1, **characterized in that** R¹ is methyl and R² is C₂-alkylene.

3. Pigment formulation according to Claim 1 or 2, **characterized in that** R³ is hexadecyl and R⁴, R⁵ and R⁶ are methyl.

4. Pigment formulation according to Claim 1 or 2, **characterized in that** R³ and R⁴ are hexadecyl and/or octadecyl and R⁵ and R⁶ are methyl.

5. Pigment formulation according to any of Claims 1 to 4, **characterized in that** the compound of the general formula II is produced in the pigment formulation from a perylenetetracarboximide compound that contains at least one sulfo group and is of the general formula III 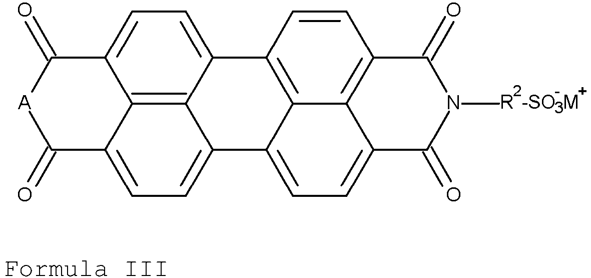
in which M⁺ is H⁺, a metal cation or the equivalent M^{m+}/m of an m-valent metal cation,
and an appropriate ammonium halide compound NR³R⁴R⁵R⁶⁺ Hal⁻.

6. Pigment formulations according to any of Claims 1 to 5, comprising
a) 99.5% to 70% by weight of base pigment of the formula I,
b) 0.5% to 30% by weight of the synergist of the formula II,
c) 0% to 5% by weight of a nonionic surfactant, and
d) 0% to 5% by weight of customary additives,
where the proportions of the respective components are based on the total weight of the formulation.

7. Process for producing the pigment formulation according to any of Claims 1 to 6, **characterized in that** the surface structure of the base pigment a) is coated uniformly with a pigment synergist b).

8. Process according to Claim 7, **characterized in that** the pigment synergist b) is added to the coarsely crystalline crude base pigment a) on fine distribution thereof in the course of a dry grinding or wet grinding operation.

9. Process according to Claim 7, **characterized in that** the pigment synergist b) is added to the water-moist presscake of the base pigment a).

10. Process according to Claim 7, **characterized in that** the pigment synergist b) is added to the finely divided base pigment a) in the course of a solvent finishing treatment.

11. Process according to Claim 7, **characterized in that** the pigment synergist b) in the dry state is mixed mechanically with the finely divided base pigment a).

12. Use of the pigment formulations according to any of Claims 1 to 6 for pigmenting high molecular weight organic materials of natural or synthetic origin in the form of plastic masses, melts, spinning solutions, varnishes, paints or printing inks.

13. Use according to Claim 12 for pigmenting (colouring) nitrocellulose-based printing inks.

14. Use of the pigment formulations according to any of Claims 1 to 6 for pigmenting colour filters.

## Revendications

1. Préparation pigmentaire contenant
a) du C. I. Pigment Violett 23 de formule I en tant que pigment de base, 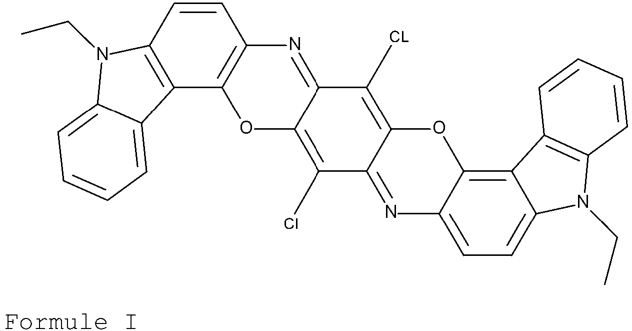
b) au moins un composé diimide de l'acide pérylènetétracarboxylique contenant un groupe acide sulfonique de formule général II en tant que synergiste pigmentaire 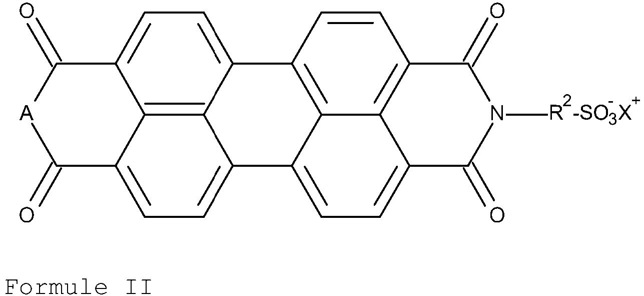 dans laquelle :
A représente un radical bivalent >NR¹ ou >N-R²-SO₃⁻X⁺ R¹ représente un atome d'hydrogène ou un groupe C₁-C₃₀-alkyle, de préférence un groupe C₁-C₁₈-alkyle et en particulier un groupe C₁-C₄-alkyle, ou un groupe aryle, de préférence phényle, le groupe aryle pouvant être non substitué ou monosubstitué ou polysubstitué par halogène, tel que chlore ou brome, sulfo, C₁-C₄-alkyle, tel que méthyle ou éthyle, C₁-C₄-alcoxy tel que méthoxy ou éthoxy ou phénylazo,
R² représente un groupe C₁-C₆-alkylène linéaire ou ramifié, en particulier éthylène ou propylène
X⁺ représente NR³R⁴R⁵R⁶⁺ où
R³, R⁴, R⁵, R⁶ représentent H, C₁-C₃₀-alkyle non ramifié ou ramifié, phényle ou phényl-C₁-C₆-alkyle.

2. Préparation pigmentaire selon la revendication 1, **caractérisée en ce que** R¹ représente méthyle et R² représente C₂-alkylène.

3. Préparation pigmentaire selon la revendication 1 ou 2, **caractérisée en ce que** R³ représente hexadécyle et R⁴, R⁵ et R⁶ représentent méthyle.

4. Préparation pigmentaire selon la revendication 1 ou 2, **caractérisée en ce que** R³ et R⁴ représentent hexadécyle et/ou octadécyle et R⁵ et R⁶ représentent méthyle.

5. Préparation pigmentaire selon l'une des revendications 1 à 4, **caractérisée en ce que** le composé de formule générale II est produit dans la préparation pigmentaire à partir d'un composé diimide de l'acide pérylènetétracarboxylique contenant au moins un groupe acide sulfonique de formule générale III 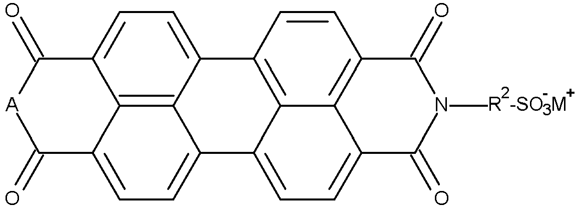 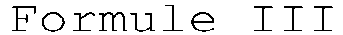
dans laquelle M⁺ représente H⁺, un cation métallique ou l'équivalent M^{m+}/m d'un cation métallique m-valent,
et d'un composé halogénure d'ammonium NR³R⁴R⁵R⁶⁺Hal⁻ correspondant.

6. Préparations pigmentaires selon l'une des revendications 1 à 5, contenant
a) 99,5 à 70% en poids du pigment de base de formule I,
b) 0,5 à 30% en poids du synergiste de formule II,
c) 0 à 5% en poids d'un agent tensioactif non ionique et
d) 0 à 5% en poids d'additifs usuels,
les proportions des composants respectifs se rapportant au poids total de la préparation.

7. Procédé de production de la préparation pigmentaire selon l'une des revendications 1 à 6, **caractérisé en ce que** la structure de surface du pigment de base a) est revêtue uniformément par un synergiste pigmentaire b).

8. Procédé selon la revendication 7, **caractérisé en ce qu'**on ajoute le synergiste pigmentaire b) au pigment de base brut a) à gros cristaux lors de sa répartition fine au cours d'un broyage à sec ou d'un broyage humide.

9. Procédé selon la revendication 7, **caractérisé en ce qu'**on ajoute le synergiste pigmentaires b) au gâteau de presse humidifié par de l'eau du pigment de base a).

10. Procédé selon la revendication 7, **caractérisé en ce qu'**on ajoute le synergiste pigmentaire b) au pigment de base brut a) finement divisé au cours d'un traitement de finition par un solvant.

11. Procédé selon la revendication 7, **caractérisé en ce qu'**on mélange mécaniquement le synergiste pigmentaire b) à l'état sec avec le pigment de base a) finement divisé.

12. Utilisation des préparations pigmentaires selon l'une des revendications 1 à 6 pour la pigmentation de matériaux organiques à haut poids moléculaire d'origine naturelle ou synthétique sous forme de masses plastiques, de masses fondues, de solutions de filage, de laques, de peintures d'enduction ou d'encres d'impression.

13. Utilisation selon la revendication 12 pour la pigmentation (coloration) d'encres d'impression à base de nitrocellulose.

14. Utilisation des préparations pigmentaires selon l'une des revendications 1 à 6 pour la pigmentation de filtres colorés.
